# EUROPÄISCHE PATENTANMELDUNG

(11) **EP 0 537 604 A1**
(43) Veröffentlichungstag der Anmeldung: **21.04.1993**
(21) Anmeldenummer: 92117078.3
(22) Anmeldetag: 07.10.1992
(51) Int. Cl.: F16F 9/04

(54) **Luftfeder mit einem Schlauchrollbalg aus elastomerem Werkstoff**

(30) Priorität: 12.10.1991 DE 4133878
(71) Anmelder: Continental Aktiengesellschaft, D-30165 Hannover (DE)
(72) Erfinder: Wode, Stefan, W-3000 Hannover 1 (DE); Hasselbring, Bernd, W-3000 Hannover 91 (DE); Schneider, Eckhard, Dr., W-3160 Lehrte (DE)

(57) **Zusammenfassung**

Eine Luftfeder weist einen Schlauchrollbalg aus elastomerem Werkstoff auf, dessen Endabschnitte mittels radial plastisch verformter Spannringe an Anschlußteilen befestigt sind. Um die Befestigung des Schlauchrollbalges höheren Auszugskräften aussetzen zu können, ist der Spannring (8), der einen Endabschnitt (1) des Schlauchrollbalges befestigt, mit dem jeweiligen Anschlußteil (4) kraftschlüssig verbunden.

## Beschreibung

Die Erfindung betrifft eine Luftfeder mit einem Schlauchrollbalg aus elastomerem Werkstoff, dessen Endabschnitte mittels radial plastisch verformten Spannringen an Anschlußteilen befestigt sind.

Gegenüber den für höhere Belastungen in größeren Fahrzeugen mit Dichtwülsten und darin eingebetteten formsteifen Kernringen versehenen üblichen Luftfederbälgen bieten die hauptsächlich für den Einsatz in Personenkraftfahrzeugen vorgesehenen einfach-zylindrischen Schlauchrollbälge den Vorteil besonders kostengünstiger Herstellung mit der Möglichkeit, sie durch einfaches mechanisches Abtrennen von größeren Schlauchlängen zu gewinnen. Für die Befestigung der untereinander gleich großen wulstlosen Endabschnitte des Schlauchrollbalges an den mit dem Fahrgestell bzw. der Fahrzeugachse verbundenen Anschlußteilen haben sich geschlossene, radial plastisch verformbare Spannringe bewährt. Durch das radiale Verformen der Spannringe werden die Endabschnitte der Schlauchrollbälge reibschlüssig verspannt.

Die Auszugskraft des Schlauchrollbalges wird durch den Reibschluß der verspannten Endabschnitte begrenzt. Es ist möglich, daß die Endabschnitte im Fahrbetrieb allmählich aus der Verspannung herausgezogen werden, was ein Versagen der Luftfederung bedeuten würde.

Es ist aus der EP-A-0 151 696 bekannt, eine höhere Auszugskraft der verspannten Endabschnitte dadurch zu erreichen, daß ein Endabschnitt des Schlauchrollbalges auf einen stutzenförmigen Ansatz geschoben wird, der umlaufende aufgesetzte Umfangsrippen aufweist. Unter dem Einfluß der radial einwärts gerichteten Preßkraft des aufgeschobenen und verformten Spannringes dringen diese Umfangsrippen in die elastisch nachgiebige Balgwandung ein, so daß die reibschlüssig wirksame Verspannung zusätzlich durch einen Formschluß in der Balgwand ergänzt wird. Die Auszugskraft wird durch diese Ausbildung erhöht. Allerdings kann ein aufgrund unterschiedlicher Fertigungstoleranzen zu starkes Pressen durch den radial verformten Spannring auf den Endabschnitt des Schlauchrollbalges nachteilig sein, da es zu einer Beschädigung des elastomeren Werkstoffes und der Festigkeitsträgerlage kommen kann.

Der Erfindung liegt die Aufgabe zugrunde, eine Luftfeder der eingangs beschriebenen Art derart auszugestalten, daß die Befestigung ihres Schlauchrollbalges höheren Auszugskräften ausgesetzt werden kann.

Die Aufgabe wird erfindungsgemäß dadurch gelöst, daß der einen Endabschnitt des Schlauchrollbalges befestigende Spannring mit dem jeweiligen Anschlußteil kraftschlüssig verbunden ist.

Der Spannring ist nicht nur auf die Wand des Schlauchrollbalges gepreßt, sondern zusätzlich auch kraftschlüssig mit dem Anschlußteil, an dem der Schlauchrollbalg befestigt wird, verbunden. Dadurch kann der Schlauchrollbalg nicht mehr zusammen mit dem Spannring vom Anschlußteil rutschen. Die Befestigung des Schlauchrollbalges weist eine gesteigerte Zugfestigkeit auf, was zu einer Erhöhung der Auszugskraft führt.

In vorteilhafter Ausgestaltung der Erfindung ist der Spannring mit einem Teilbereich an dem jeweiligen Anschlußteil angeklebt oder durch Punktschweißen befestigt. Dadurch wird eine äußerst wirtschaftliche Befestigungsart erreicht.

Gemäß den vorteilhaften, in den Ansprüchen 4 bis 6 gekennzeichneten Ausgestaltungen der Erfindung ist der Spannring mit einem Teilbereich formschlüssig mit dem Anschlußteil verbunden. Der Formschluß wird durch eine konstruktive Maßnahme hergestellt und ermöglicht eine beträchtliche Erhöhung der Auszugskraft des befestigten Schlauchrollbalges.

Durch die im Anspruch 7 gekennzeichnete vorteilhafte Ausführung der Erfindung wird die erfindungsgemäße kraftschlüssige Befestigung des Endabschnittes durch die einen Formschluß in der Balgwandung bewirkenden Halterippen weiter erhöht.

Durch die Erfindung wird der den Endabschnitt des Schlauchrollbalges an dem Anschlußteil befestigende Spannring zusätzlich selbst mit diesem Anschlußteil kraftschlüssig verbunden. Die Auszugskraft des Schlauchrollbalges wird wesentlich erhöht.

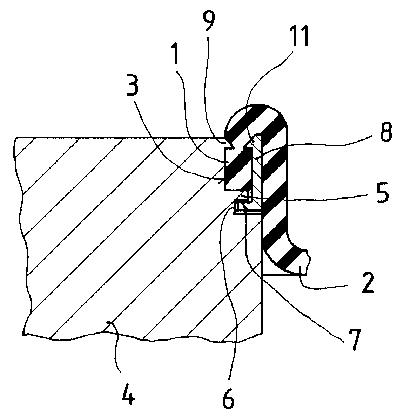

Anhand der Zeichnung wird nachstehend ein Ausführungsbeispiel der Erfindung näher erläutert.

Der Endabschnitt 1 eines wulstlosen Schlauchrollbalges 2 ist auf einen zylindrischen Ansatz 3 eines an einer Fahrzeugachse befestigten, als Abrollkolben 4 ausgebildeten Anschlußteiles geschoben. Der zylindrische Ansatz 3 springt gegenüber dem Abrollkolben 4 im Durchmesser ein und bildet so eine Stufe 5.

Unterhalb der Stufe 5 weist der Abrollkolben 4 eine umlaufende Nut 6 auf, in die ein umlaufender, radial nach innen ragender Vorsprung 7 faßt. Dieser Vorsprung 7 ist Teil eines um den Ansatz 3 gelegten metallischen, radial plastisch verformten Spannringes 8, der den Endabschnitt 1 des Schlauchrollbalges 2 zwischen sich und dem Ansatz 3 einspannt.

Der Ansatz 3 des Abrollkolbens 4 ist an seinem oberen Ende mit einer umlaufenden Halterippe 9 versehen, der in gleicher Höhe eine nach innen ragende, umlaufende Halterippe 11 des Spannringes 8 gegenüberliegt. Die beiden Halterippen 9 und 11 sind unter dem Einfluß der radial einwärts gerichteten Preßkraft des aufgeschobenen Spannringes 8 in die elastisch nachgiebige Balgwand des Endabschnittes 1 des Schlauchrollbalges 2 eingedrungen.

Die reibschlüssig wirksame Verspannung des Schlauchrollbalges 2 durch den radial plastisch verformten Spannring 8 wird durch die Halterippen 9 und 11 durch einen Formschluß ergänzt und verstärkt. Der umlaufende Vorsprung 7 des Spannringes 8 verbindet diesen formschlüssig mit dem Abrollkolben 4, was zu einer deutlichen Erhöhung der Auszugskraft der Schlauchrollbalgbefestigung führt.

## Patentansprüche

1. Luftfeder mit einem Schlauchrollbalg aus elastomerem Werkstoff, dessen Endabschnitte mittels radial plastisch verformter, eine Pressung auf die Endabschnitte ausübender Spannringe an Anschlußteilen befestigt sind,
**dadurch gekennzeichnet,**
daß der einen Endabschnitt (1) des Schlauchrollbalges befestigende Spannring (8) mit dem jeweiligen Anschlußteil (4) zusätzlich unmittelbar kraftschlüssig verbunden ist.

2. Luftfeder nach Anspruch 1, dadurch gekennzeichnet, daß der Spannring (8) mit einem Teilbereich an dem jeweiligen Anschlußteil (4) angeklebt ist.

3. Luftfeder nach Anspruch 1, dadurch gekennzeichnet, daß der Spannring (8) durch Punktschweißen an dem jeweiligen Anschlußteil (4) befestigt ist.

4. Luftfeder nach Anspruch 1, dadurch gekennzeichnet, daß der Spannring (8) mit einem Teilbereich formschlüssig mit dem Anschlußteil (4) verbunden ist.

5. Luftfeder nach Anspruch 4, dadurch gekennzeichnet, daß der Spannring (8) radial nach innen ragende Vorsprünge aufweist, die in entsprechende Ausnehmungen des Anschlußteiles (4) fassen.

6. Luftfeder nach Anspruch 5, dadurch gekennzeichnet, daß der Spannring (8) einen nach innen ragenden, umlaufenden Vorsprung (7) aufweist, der in eine umlaufende Nut (6) des Anschlußteiles (4) ragt.

7. Luftfeder nach einem der Ansprüche 1 bis 6, dadurch gekennzeichnet, daß das Anschlußteil (4) und/oder der Spannring (8) in die Balgwand des Endabschnittes (1) des Schlauchrollbalges (2) eindringende Halterippen (9 bzw. 11) aufweisen.
